(19) 

**Europäisches Patentamt**
**European Patent Office**
**Office européen des brevets**

(11) **EP 2 385 643 A1**

(12) **EUROPEAN PATENT APPLICATION**

(43) Date of publication:
**09.11.2011  Bulletin 2011/45**

(51) Int Cl.:
**H04L 1/00** $^{(2006.01)}$

(21) Application number: **10305471.4**

(22) Date of filing: **03.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Alcatel Lucent**
**75008 Paris (FR)**

(72) Inventor: **HOEK, Cornelis**
**71732, Tamm (DE)**

(74) Representative: **Kleinbub, Oliver et al**
**Alcatel-Lucent Deutschland AG**
**Lorenzstr. 10**
**70435 Stuttgart (DE)**

(54) **A method for selection of a modulation and coding scheme, and a device therefor**

(57)    The invention concerns a method for selection of a modulation and coding scheme for transmission between a first device and a second device based on channel state information, wherein the second device repeatedly sends channel state information to the first device, the first device determines a first value of a channel quality parameter based on a channel state information, the first device determines a time-dependent variation of the channel quality parameter based on at least two channel state information reported at different points in time, the first device determines a second value of the channel quality parameter based on the first value of the channel quality parameter and the time-dependent variation of the channel quality parameter, and the first device selects a modulation and coding scheme based on the second value of the channel quality parameter, and a device therefor.

Fig. 4

## Description

### Field of the invention

The invention relates to a method for selection of a modulation and coding scheme for transmission between a first device and a second device based on channel state information, and a device adapted to perform said method.

### Background

In wireless communication networks using standards like e.g. Third Generation Partnership Long Term Evolution (3GPP LTE) standard, knowledge of accurate and timely channel state information (CSI) at the transmitter is important as it can e.g. lead to large throughput gains or a reduced error rate by choosing an appropriate modulation and coding scheme or precoding vector if MIMO (MIMO = multiple-input multiple output) is applied.

For many MIMO algorithms the resulting signal to interference and noise ratio (SINR) at the receiver side of the MIMO system depends on the quality of the channel state information (CSI) that is available at the transmitter. For frequency division duplex (FDD), the downlink channel state is detected at the downlink receiver, i.e. at the mobile side and quantised and reported on the uplink to the downlink transmitter, i.e. the base station in regular time intervals. For time division duplex (TDD), the channel state can be measured during the up-downlink phase only and gets outdated during the downlink phase.

However, even if MIMO is not applied for transmission between a transmitter and a receiver, knowledge of accurate and timely channel state information (CSI) at the transmitter is important in order to select an appropriate modulation and coding scheme (MCS) leading e.g. to an acceptable level for the block error rate (BLER) at the receiver.

### Summary

In the time span between the updates of 2 channel state information (CSI), the quality of the channel state information deteriorates. As a result for many algorithms that use the channel state information as an input e.g. to determine coding parameters like modulation and coding schemes or precoding vectors, the signal to interference and noise ratio (SINR) at the receiver side and the achievable throughput will be decreasing between updates of 2 channel state information (CSI). If the modulation and coding scheme (MCS) is selected based on the reported CSI information and is used without change until the next CSI update, then the error rate will be increasing between 2 CSI updates. Modulation and coding schemes generally are combinations of different modulation schemes and coding rates which require different minimum signal to interference and noise ratios (SINR), i.e. which have a different robustness against interference and noise.

According to the prior art, based on the reported channel state information CSI, the modulation and coding scheme is selected and used until the next CSI update. As a result, the block error rate (BLER) increases between two CSI updates, and the modulation and coding is not optimal matched to the changing conditions.

The object of the invention is thus to propose a method for selection of a modulation and coding scheme for transmission between a first device and a second device based on channel state information with a flexible adaptation of the modulation and coding scheme to changing radio conditions which provides a more constant block error rate.

The object is achieved by a method for selection of a modulation and coding scheme for transmission between a first device and a second device based on channel state information, wherein

- the second device repeatedly sends channel state information to the first device,

- the first device determines a first value of a channel quality parameter based on a channel state information,

- the first device determines a time-dependent variation of the channel quality parameter based on at least two channel state information reported at different points in time,

- the first device determines a second value of the channel quality parameter based on the first value of the channel quality parameter and the time-dependent variation of the channel quality parameter,

- and the first device selects a modulation and coding scheme based on the second value of the channel quality parameter.

The object is furthermore achieved by a device for transmission between the device and a second device using selection of a modulation and coding scheme based on channel state information, wherein the device comprises at least one processing means which is adapted to

- receive channel state information sent from the second device,

- determine a first value of a channel quality parameter based on a channel state information,

- determine a time-dependent variation of the channel quality parameter based on at least two channel state information reported at different points in time,

- determine a second value of the channel quality parameter based on the first value of the channel quality parameter and the time-dependent variation of the channel quality parameter,

- and select a modulation and coding scheme based on the second value of the channel quality parameter.

In other words, according to an embodiment of the invention, a modulation and coding scheme (MCS) is selected based on the last reported channel state information (CSI), on the time elapsed since the last CSI report, and on the CSI and/or SINR variation as a function of time. The variation of CSI or SINR as a function of time can be estimated by observing and analyzing the reported CSI. The channel state information can e.g. comprise a signal to interference and noise ratio, a signal to noise ratio, a channel quality indicator, a precoding matrix indicator, and a rank indicator, and e.g. a variation of the signal to interference and noise ratio, the signal to noise ratio, or the channel quality indicator can be estimated.

In an embodiment of the invention, the CSI determined and reported at time (n) is used to determine the optimal precoding vector, i.e. transmitter weights $W(n)$ used for MIMO transmission, and the resulting signal to interference and noise ratio $SINR\_start(n)$ at the receiver. For the next reported CSI at time$(n+1)$, the resulting outdated signal to interference and noise ratio $SINR\_end(n)$ is calculated using the old transmitter weights $W(n)$ and the new CSI. The transmitter weights $W(n)$ can either be determined in the receiver and be transmitted to the transmitter, or be determined in the transmitter.

The transmitter now can average the found SINR degradation $SINR\_start(n)$ - $SINR\_end(n)$ for many reported CSI and by doing this obtains knowledge about the SINR reduction as a function of the initial SINR and the lapsed time.

The transmitter can then adjust the modulation and coding scheme MCS as a function of time so that the modulation and coding scheme MCS is better matched to the degrading SINR at the receiver that is caused by the CSI getting more and more outdated.

Especially advantageous is the application of the invention for systems that cancel interference like network MIMO or adaptive beamforming since the quality of the interference cancelation depends very much on the quality of the channel state information, so that large reductions of the SINR can be expected if the channel state information gets outdated.

The invention is described in the following within the framework of 3GPP LTE, however as the invention is not restricted to 3GPP LTE, but can in principle be applied in other networks that transmit channel state information in uplink in order to select coding parameters, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

**Brief description of the figures**

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows the SINR and the BLER at a receiver without adjustment of MCS according to the prior art.

Fig. 4 schematically shows exemplarily a procedure for adjusting of MCS according to an embodiment of the invention.

Fig. 5 schematically shows the SINR and the BLER at a receiver with adjustment of MCS according to an embodiment of the invention.

**Description of the embodiments**

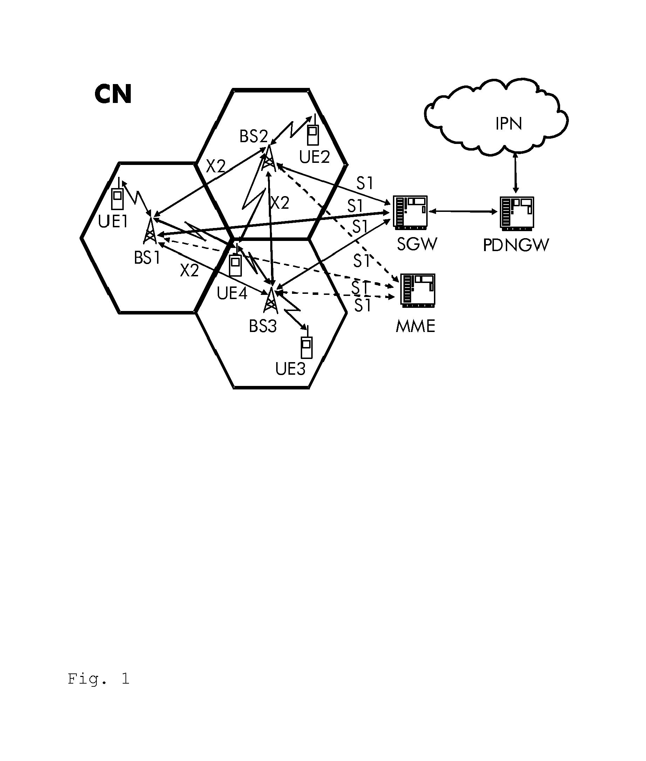

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE4 and the respective serving base station BS1-BS3.

The mobility management entity MME performs tasks of the subscriber management and the session management, and also performs the mobility management during handover between different access networks.

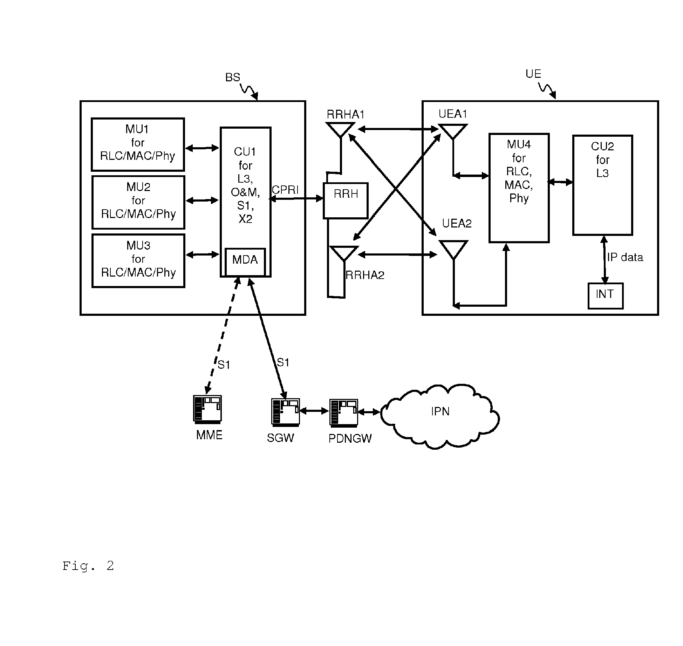

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

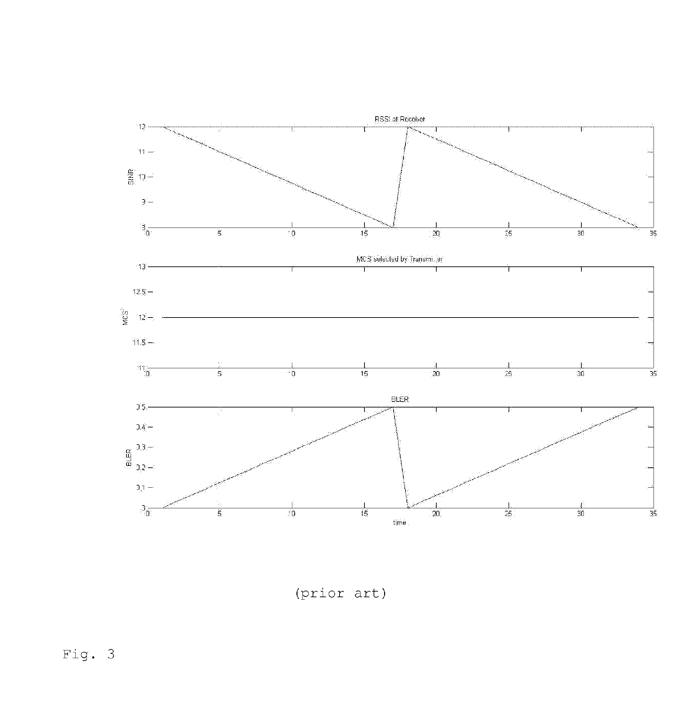

Fig. 3 schematically shows the signal to interference and noise ratio (SINR) and the block error rate (BLER) at a receiver without adjustment of the modulation and coding scheme (MCS) according to the prior art.

In the upper part of fig. 3, the so-called received signal strength indication (RSSI) at the receiver, as e.g. the user terminal UE in fig. 2, is plotted in arbitrary units against an arbitrary time scale.

In the middle part of fig. 3, the so-called modulation and coding scheme (MCS) for transmission from the transmitter, as e.g. the base station BS in fig. 2, is plotted in arbitrary units against the arbitrary time scale.

In the lower part of fig. 3, the so-called block error rate (BLER) at the receiver, as e.g. the user terminal UE in fig. 2, is plotted in arbitrary units against the arbitrary time scale.

The transmitter, as e.g. the base station BS in fig. 2, receives a channel state information transmitted from the user terminal UE at time=1, time=18, time=35, and so on. The base station BS computes an appropriate precoding vector needed for MIMO application based on the channel state information (CSI) e.g. received at time=1, a resulting signal to interference and noise ratio (SINR) at the user terminal UE for the appropriate precoding vector, and an appropriate modulation and coding scheme (MCS) for the resulting signal to interference and noise ratio (SINR).

As can be seen in the middle part of fig. 3, the modulation and coding scheme (MCS) is constant between the transmission of two consecutive channel state information (CSI).

As the channel state changes from time=1 to time=18, i.e. between the transmissions of two channel state information, the precoding vector determined at time=1 is outdating in the time lapse, and is thus less appropriate, the resulting signal to interference and noise ratio (SINR) at the user terminal UE is decreasing, and the resulting block error rate (BLER) at the user terminal UE is increasing until the next channel state information (CSI) is available at the base station BS and the cycle starts again, i.e. a more appropriate precoding vector is determined.

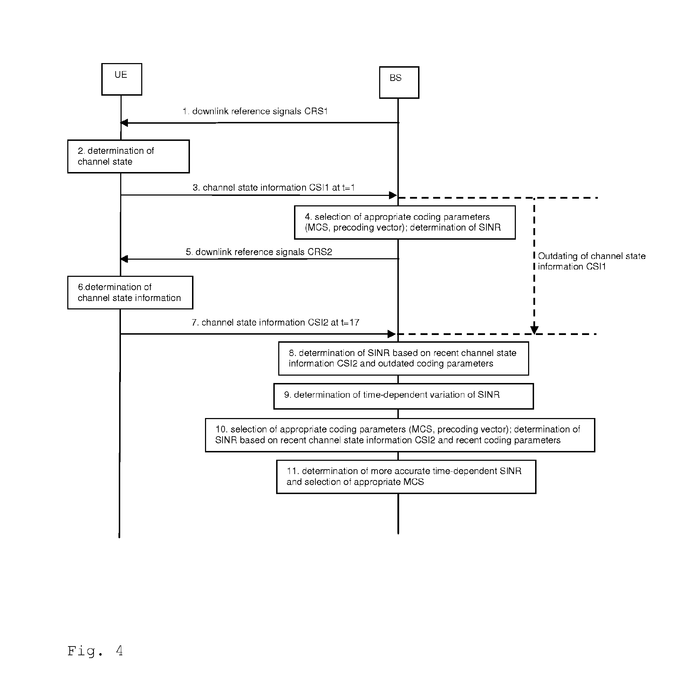

Fig. 4 schematically shows exemplarily a procedure for adjusting of the modulation and coding scheme (MCS) according to an embodiment of the invention.

In a first step denoted with 1, a transmitter BS, as e.g. a base station, sends a signalling message CRS1 to a receiver, as e.g. a user terminal UE. Said signalling message CRS1 comprises downlink reference signals, as e.g. cell-specific reference signals used for channel estimation.

In a second step denoted with 2, the receiver UE determines a channel state comprising e.g. quantized signal to interference and noise ratios (SINR) as a channel quality based on the downlink reference signals CRS1.

In a third step denoted with 3, the receiver UE sends a signalling message at time t=1 to the transmitter BS. Said signalling message comprises channel state information CSI1, as e.g. a so-called channel quality indicator, a so-called precoding matrix indicator, or a so-called rank indicator. The channel quality indicator represents either a signal to interference and noise ratio (SINR), which may also be quantized, or a recommended modulation scheme and coding scheme that should, preferably, be used for the downlink transmission. The precoding matrix indicator provides a precoder matrix that should, preferably, be used for downlink transmission. The rank indicator provides information about the channel rank, i.e. the number of layers that should, preferably, be used for downlink transmission to a user terminal. As the channel state changes in the time lapse, the channel state information CSI1 gets outdated with increasing time.

In a fourth step denoted with 4, the transmitter BS determines an appropriate precoding vector based on the received channel state information CSI1. Then, the transmitter BS determines the resulting signal to interference and noise ratio (SINR) based on the selected precoding vector and based on the received channel state information CSI1. The transmitter BS now determines an appropriate modulation and coding scheme (MCS) based on the determined resulting signal to interference and noise ratio (SINR).

In the following, the determination of the appropriate precoding vector, and the calculation of the resulting signal to interference and noise ratio (SINR) is described in detail for the case of so-called closed loop transmit diversity in a MISO system (MISO = multiple-input single-output) with a number of transmit antennas nTX>=2, and a single receive antenna nRX=1.

For simplicity, flat fading is assumed.

The received signal r (i.e., baseband samples after matched filtering etc.) can be written as

$$r = \mathbf{h}^\top \mathbf{x} + z \quad \text{with} \quad \begin{array}{l} \mathbf{x} = [x_1, x_2, ..., x_{nTX}]^\top \\ \mathbf{h} = [h_1, h_2, ..., h_{nTX}]^\top \end{array} \quad \text{and} \quad \begin{array}{l} \text{trace}(\mathbf{R}_{xx}) = \text{trace}(E_{tx}\{\mathbf{x}\mathbf{x}^{\mathsf{H}}\}) = P_T \\ E\{|z|^2\} = \sigma_z^2 = \sigma_n^2 + \sigma_i^2 \end{array} \quad ,$$

where z includes thermal noise with variance $\sigma_n^2$ and interference with variance $\sigma_i^2$.

The transmit power constraint is that trace $(R_{XX}) = P_T$, with $P_T$ being the transmit power.

The channel vector **h** can be measured by the user terminal by evaluating the transmitted common reference signals.

The vector **x** of transmitted signals at each of the transmit antennas is created by multiplying the transmit symbols s with one codebook vector, i.e. precoding vector, out of a set of possible codebook entries. E.g. for codebook vector $v_i$

$$\mathbf{x} = v_i \sqrt{P_T}\, s \quad \text{with} \quad E_{tx}\{|s|^2\} = 1 \quad \text{and} \quad \|\mathbf{v}_i\| = 1.$$

The resulting SINR is

$$SINR_{\text{MISO}} = \frac{E_{tx}\{|\mathbf{h}^\top \mathbf{x}|^2\}}{E\{|z|^2\}} = \frac{E_{tx}\{|\mathbf{h}^\top \mathbf{x}|^2\}}{\sigma_z^2} = \frac{E_{tx}\{\mathbf{x}^{\mathsf{H}}\mathbf{h}^*\mathbf{h}^\top \mathbf{x}\}}{\sigma_z^2} = \frac{P_T}{\sigma_z^2}\, \mathbf{v}_i^{\mathsf{H}}\mathbf{h}^*\mathbf{h}^\top \mathbf{v}_i$$

The SINR is maximized by selecting the code vector $\mathbf{v}_i$ for which the SINR is maximized:

$$\mathbf{v}_{\text{MISO,opt}} = \arg\max_{\mathbf{v}_i}\ \mathbf{v}_i^{\mathsf{H}}\mathbf{h}^*\mathbf{h}^\top \mathbf{v}_i$$

In a fifth step denoted with 5, in analogy to step 1, the transmitter BS sends a signalling message CRS2 comprising downlink reference signals to the receiver UE.

In a sixth step denoted with 6, in analogy to step 2, the receiver UE determines a channel state comprising e.g. quantized signal to interference and noise ratios (SINR) as a channel quality based on the downlink reference signals CRS2.

In a seventh step denoted with 7, in analogy to step 3, the receiver UE sends a signalling message at time t=17 to the transmitter BS. Said signalling message comprises channel state information CSI2, as e.g. a so-called channel quality indicator, a so-called precoding matrix indicator, or a so-called rank indicator. The channel quality indicator represents either a signal to interference and noise ratio (SINR), which may also be quantized, or a recommended modulation scheme and coding scheme that should, preferably, be used for the downlink transmission. The precoding matrix indicator provides a precoder matrix that should, preferably, be used for downlink transmission. The rank indicator provides information about the channel rank, i.e. the number of layers that should, preferably, be used for downlink transmission to a user terminal.

In a eighth step denoted with 8, the transmitter BS determines a resulting signal to interference and noise ratio (SINR) based on the outdated precoding vector selected at time t=1, and based on the received recent channel state information CSI2.

In a ninth step denoted with 9, the transmitter BS determines a time-dependent variation of the signal to interference and noise ratio (SINR) based on the difference between the signal to interference and noise ratio (SINR) determined in step 4 and determined in step 8.

In a tenth step denoted with 10, the transmitter BS determines a recent precoding vector based on the received recent channel state information CSI2. Then, the transmitter BS determines a resulting signal to interference and noise ratio (SINR) based on the recent precoding vector and based on the received recent channel state information CSI2.

In an eleventh step denoted with 11, the transmitter BS now can determine an appropriate modulation and coding scheme (MCS) at an arbitrary point in time based on the resulting recent signal to interference and noise ratio (SINR) determined in step 10, and based on the time-dependent variation of the signal to interference and noise ratio (SINR) determined in step 9.

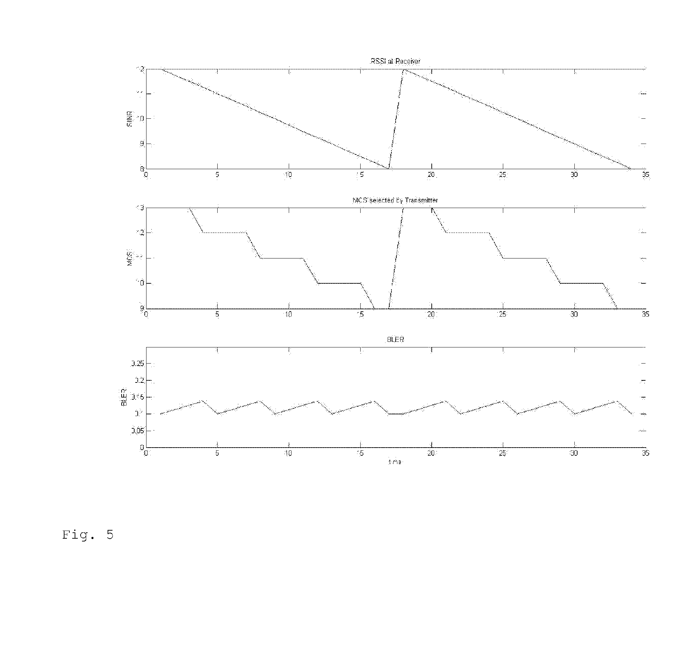

Fig. 5 schematically shows the signal to interference and noise ratio (SINR) and the block error rate (BLER) at a receiver with adjustment of the modulation and coding scheme (MCS) according to an embodiment of the invention.

In the upper part of fig. 5, the so-called received signal strength indication (RSSI) at the receiver, as e.g. the user terminal UE in fig. 2, is plotted in arbitrary units against an arbitrary time scale.

In the middle part of fig. 5, the so-called modulation and coding scheme (MCS) for transmission from the transmitter, as e.g. the base station BS in fig. 2, is plotted in arbitrary units against the arbitrary time scale.

In the lower part of fig. 5, the so-called block error rate (BLER) at the receiver, as e.g. the user terminal UE in fig. 2, is plotted in arbitrary units against the arbitrary time scale.

The transmitter, as e.g. the base station BS in fig. 2, receives a channel state information transmitted from the user terminal UE at time=1, time=18, time=35, and so on. The base station BS computes an appropriate precoding vector needed for MIMO application based on the channel state information (CSI) e.g. received at time=1, a resulting signal to interference and noise ratio SINR_start at the user terminal UE for the appropriate precoding vector, and an appropriate modulation and coding scheme (MCS) for the resulting signal to interference and noise ratio (SINR).

As the channel state changes e.g. from time=1 to time=18, i.e. between the transmissions of two channel state information, the precoding vector determined at time=1 is outdating in the time lapse, and is thus less appropriate, the resulting signal to interference and noise ratio (SINR) at the user terminal UE is decreasing.

The degradation of the signal to interference and noise ratio (SINR) can be estimated by the transmitter BS as described under fig. 4 by using the old, i.e. outdated precoding vector with the new channel state information CSI and computing the resulting signal to interference and noise ratio (SINR_end). Averaging the difference (SINR_start - SINR_end) for a large number of reported channel state information CSI gives the average degradation of the signal to interference and noise ratio (SINR) from time=1 to time=17.

The transmitter BS can now for each time 2-17 estimate the degradation of the signal to interference and noise ratio (SINR) and react on the degradation by reducing the modulation and coding scheme MCS, i.e. by using an easier, more robust modulation and coding scheme, in order to correct for the lower signal to interference and noise ratio (SINR).

As can be seen in the middle part of fig. 5, the modulation and coding scheme (MCS) is reduced in discrete steps between time=1 and time=17 between the transmission of two consecutive channel state information (CSI). A higher modulation and coding scheme can e.g. correspond to a scheme applying 64QAM (QAM = quadrature amplitude modulation) which requires a high signal to interference and noise ratio (SINR), whereas a lower modulation and coding scheme can e.g. correspond to a scheme applying 4QAM, which corresponds to QPSK (QPSK = quadrature phase shift keying), which also works with a lower signal to interference and noise ratio (SINR).

As a result, the block error rate (BLER) is not monotonically increasing from time=1 to time=17 as this is the case in the prior art depicted in fig. 3, but is kept in a more constant range as can be seen in the lower part of fig. 5.

**Claims**

1. A method for selection of a modulation and coding scheme for transmission between a first device (BS) and a second device (UE) based on channel state information, wherein

   • the second device (UE) repeatedly sends channel state information to the first device (BS),
   • the first device (BS) determines a first value of a channel quality parameter based on a channel state information,
   • the first device (BS) determines a time-dependent variation of the channel quality parameter based on at least two channel state information reported at different points in time,
   • the first device (BS) determines a second value of the channel quality parameter based on the first value of the channel quality parameter and the time-dependent variation of the channel quality parameter,
   • and the first device (BS) selects a modulation and coding scheme based on the second value of the channel quality parameter.

2. A method according to claim 1, wherein the channel quality parameter is at least one of the group of signal to interference and noise ratio, signal to noise ratio, and channel quality indicator.

3. A method according to any of the preceding claims,
   wherein the channel state information comprises at least one of the group of signal to interference and noise ratio, signal to noise ratio, channel quality indicator, precoding matrix indicator, and rank indicator.

4. A method according to any of the preceding claims,
   wherein

   • a precoding vector for transmission from the first device (BS) is selected based on a channel state information,
   • the first device (BS) determines the first value of the channel quality parameter based on the selected precoding vector,
   • and the first device (BS) determines the time-dependent variation of the channel quality parameter based on at least one selected precoding vector and at least two channel state information reported at different points in time.

5. A method according to claim 4, wherein

   • the second device (UE) selects the precoding vector based on the channel state information,
   • and the channel state information sent by the second device (UE) to the first device (BS) comprises information related to the precoding vector.

6. A method according to claim 4, wherein the first device (BS) selects the precoding vector based on the channel state information.

7. A method according to any of the preceding claims,
   wherein the time-dependent variation of the channel quality parameter is an average of at least two time-dependent variations of the channel quality parameter, each time-dependent variation of the channel quality parameter being based on at least two channel state information reported at different points in time.

8. A method according to any of the preceding claims,
   wherein for transmission between a first device (BS) and a second device (UE) network multiple-input multiple output or adaptive beamforming is applied.

9. A device (BS) for transmission between the device (BS) and a second device (UE) using selection of a modulation and coding scheme based on channel state information, wherein the device (BS) comprises at least one processing means which is adapted to

   • receive channel state information sent from the second device (UE),
   • determine a first value of a channel quality parameter based on a channel state information,
   • determine a time-dependent variation of the channel quality parameter based on at least two channel state information reported at different points in time,
   • determine a second value of the channel quality parameter based on the first value of the channel quality parameter and the time-dependent variation of the channel quality parameter,
• and select a modulation and coding scheme based on the second value of the channel quality parameter.

10. A device (BS) according to claim 9, wherein the device (BS) is a base station of a communication network.

11. A communication network (CN) comprising at least one base station (BS) according to claim 10.

Fig. 1

Fig. 2

(prior art)

Fig. 3

Fig. 4

Fig. 5

Europäisches
Patentamt

European
Patent Office

Office européen
des brevets

# EUROPEAN SEARCH REPORT

**Application Number**

EP 10 30 5471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/249159 A1 (ABRAHAM SANTOSH [US] ET AL ABRAHAM SANTOSH [US] ET AL) 10 November 2005 (2005-11-10) * the whole document * ----- | 1-11 | INV. H04L1/00 |
| A | MULLER A ET AL: "Improving HSDPA link adaptation by considering the age of channel quality feedback information" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE LNKD-DOI:10.1109/VETECF.2005.1558220, vol. 3, 25 September 2005 (2005-09-25), pages 1643-1647, XP010878723 ISBN: 978-0-7803-9152-9 * the whole document * ----- | 1-11 | |
| A | US 2006/268976 A1 (BAUM KEVIN [US] ET AL) 30 November 2006 (2006-11-30) * the whole document * ----- | 1-11 | **TECHNICAL FIELDS SEARCHED (IPC)** H04L |

The present search report has been drawn up for all claims

| Place of search | Date of completion of the search | Examiner |
|---|---|---|
| Munich | 27 September 2010 | Murcia Martinez, J |

EPO FORM 1503 03.82 (P04C01)

**ANNEX TO THE EUROPEAN SEARCH REPORT
ON EUROPEAN PATENT APPLICATION NO.**                    EP 10 30 5471

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2010

| Patent document cited in search report | Publication date | Patent family member(s) | Publication date |
|---|---|---|---|
| US 2005249159 A1 | 10-11-2005 | AU 2005257811 A1 | 05-01-2006 |
| | | BR PI0510699 A | 26-12-2007 |
| | | CA 2567039 A1 | 05-01-2006 |
| | | EP 1749360 A2 | 07-02-2007 |
| | | JP 4519907 B2 | 04-08-2010 |
| | | JP 2007536830 T | 13-12-2007 |
| | | KR 20070012734 A | 26-01-2007 |
| | | KR 20090013242 A | 04-02-2009 |
| | | US 2009290655 A1 | 26-11-2009 |
| | | WO 2006001909 A2 | 05-01-2006 |
| US 2006268976 A1 | 30-11-2006 | EP 1880495 A1 | 23-01-2008 |
| | | KR 20080007494 A | 21-01-2008 |
| | | WO 2006118892 A1 | 09-11-2006 |

EPO FORM P0459

For more details about this annex : see Official Journal of the European Patent Office, No. 12/82